(19) Europäisches Patentamt
European Patent Office
Office européen des brevets

(11) **EP 4 693 431 A1**

(12) **EUROPEAN PATENT APPLICATION**
published in accordance with Art. 153(4) EPC

(43) Date of publication:
**11.02.2026 Bulletin 2026/07**

(21) Application number: **24780485.9**

(22) Date of filing: **27.03.2024**

(51) International Patent Classification (IPC):
***H01M 4/13*** (2010.01)

(52) Cooperative Patent Classification (CPC):
**H01M 4/13;** Y02E 60/10

(86) International application number:
**PCT/JP2024/012308**

(87) International publication number:
**WO 2024/204383 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023051785**

(71) Applicant: **FUJIFILM Corporation**
**Tokyo 106-8620 (JP)**

(72) Inventor: **ISOJIMA, Hiroshi**
**Minamiashigara-shi, Kanagawa 250-0193 (JP)**

(74) Representative: **HGF**
**HGF Limited**
**4th Floor, 1 City Square**
**Leeds LS1 2AL (GB)**

(54) **POSITIVE ELECTRODE SHEET FOR NONAQUEOUS ELECTROLYTE SECONDARY BATTERY AND NONAQUEOUS ELECTROLYTE SECONDARY BATTERY**

(57)     Provided are a positive electrode sheet obtained by laminating a positive electrode collector and a positive electrode active material layer, in which the positive electrode active material layer contains a positive electrode active material and a conductive auxiliary agent, and has a thickness of 120 $\mu$m or more, a specific surface area x (m$^2$/g) of the conductive auxiliary agent and a content y (% by mass) of the conductive auxiliary agent in the positive electrode active material layer satisfy $5 \leq x \times y \leq 420$ and $100 \leq x$, and an electron conductivity z (mS/cm) of the positive electrode active material is 1.0 or more; and a non-aqueous electrolytic solution secondary battery including the sheet as a positive electrode.

FIG. 1

EP 4 693 431 A1

**Description**

**BACKGROUND OF THE INVENTION**

1. Field of the Invention

The present invention relates a positive electrode sheet for a non-aqueous electrolytic solution secondary battery and a non-aqueous electrolytic solution secondary battery using the same.

2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been enlarged and been used in transportation equipment such as automobiles, and the use of the battery as a storage device for nighttime power, power generation by natural energy, and the like has also been promoted.

A general manufacturing method of the non-aqueous electrolytic solution secondary battery will be described. First, a positive electrode sheet and a negative electrode sheet are disposed to face each other with a separator interposed therebetween to obtain an electrode laminate, the positive electrode sheet consisting of a laminated structure of a positive electrode collector and a positive electrode active material layer and the negative electrode sheet consisting of a laminated structure of a negative electrode collector and a negative electrode active material layer. Usually, the electrode laminate is further wound to obtain a wound electrode body, and the wound electrode body is stored in a battery case or the like. Next, an electrolytic solution is poured into the battery case, and the entire positive electrode active material layer, the separator, and the negative electrode active material layer are permeated with the electrolytic solution. Thereafter, the obtained battery is charged and discharged (initialized) to form a solid electrolyte interface (SEI) on the negative electrode, thereby obtaining the non-aqueous electrolytic solution secondary battery.

Among electrode active materials, a carbon-based material or the like is widely used as a negative electrode active material, and electron conductivity thereof is relatively high. On the other hand, electron conductivity of a positive electrode active material is generally inferior to that of the carbon-based material. Therefore, it is considered that improvement of the electron conductivity of the positive electrode active material in the non-aqueous electrolytic solution secondary battery is an important technical element in improvement of output characteristics of the battery. A technique of improving battery performance by improving the positive electrode active material has been proposed. For example, JP2022-139794A discloses an invention of a non-aqueous electrolyte power storage element including a positive electrode which contains, as a positive electrode active material in a positive electrode material mixture, a lithium transition metal compound having a carbon-coated polyanion structure and substantially does not contain a conductive agent, and a non-aqueous electrolyte having a viscosity of 4.2 mPa·s or less in an environment of 25°C. According to the technique disclosed in JP2022-139794A, it is possible to provide a non-aqueous electrolyte power storage element having excellent low-temperature discharging characteristics after high temperature storage.

**SUMMARY OF THE INVENTION**

In the manufacturing of the non-aqueous electrolytic solution secondary battery, the positive electrode active material layer is usually formed by applying a slurry (a slurry for forming a positive electrode) containing a positive electrode active material and a conductive auxiliary agent onto a positive electrode collector, and drying the slurry. In this case, in order to improve a manufacturing efficiency, it is required to control characteristics of the slurry for forming a positive electrode from various angles. For example, in order to improve handleability of the slurry for forming a positive electrode and to uniformly and accurately form the positive electrode active material layer, the slurry for forming a positive electrode is required to have an appropriate low viscosity and to be capable of maintaining a stable dispersion state of solid particles (positive electrode active material and conductive auxiliary agent) contained therein (dispersion stability). In addition, in order to shorten time, the slurry for forming a positive electrode is required to be capable of being quickly dried after coating (easy drying properties).

From the viewpoint of the easy drying properties, it is considered to reduce an amount of a solvent in the slurry for forming a positive electrode and to apply a slurry having a high concentration of solid contents (total content of the active material and the conductive auxiliary agent). However, in a case where the concentration of solid contents in the positive electrode slurry increases, the viscosity of the slurry increases, aggregation is likely to occur and the dispersion stability decreases, and thus coating suitability is deteriorated. As a result, uniformity of the obtained positive electrode active material layer is impaired, the surface is in a rough state, and thus the performance of the obtained batteries is likely to vary.

In addition, in order to increase a capacity (increase an energy density) of the non-aqueous electrolytic solution secondary battery, in the positive electrode active material layer, there is an attempt to increase the content of the positive electrode active material which stores ions and to suppress the content of the conductive auxiliary agent. However, in a case where the thickness of the positive electrode active material layer is increased in order to increase the amount of the positive electrode active material, the thickness hinders efficient movement of electrons in the positive electrode active material layer, and in a case where the content of the conductive auxiliary agent is further suppressed, an electron conductivity is further reduced, which is disadvantageous in the output characteristics. There is an attempt to achieve both high capacity and high output characteristics by using a small amount of a conductive auxiliary agent having a high specific surface area and easy to construct an electron conduction network; but the conductive auxiliary agent having a high specific surface area induces aggregation of solid particles in the slurry, making it more difficult to ensure the dispersion stability.

An object of the present invention is to provide a positive electrode sheet for a non-aqueous electrolytic solution secondary battery, with which a non-aqueous electrolytic solution secondary battery having excellent manufacturing suitability and exhibiting excellent battery performance can be obtained. Another object of the present invention is to provide a non-aqueous electrolytic solution secondary battery using the positive electrode sheet for a non-aqueous electrolytic solution secondary battery.

As a result of intensive studies in view of the above-described problems, the present inventors have found that, in a case where a positive electrode active material having an electron conductivity controlled within a specific range is used as a positive electrode active material contained in a positive electrode active material layer, a conductive auxiliary agent having a specific surface area of equal to or more than a specific value is used as a conductive auxiliary agent contained in the positive electrode active material layer, and the specific surface area and a content of the conductive auxiliary agent in the positive electrode active material layer (in a solid content of a slurry for forming the positive electrode active material) satisfy a specific relationship, even when the positive electrode active material layer is formed thick, it is possible to form a positive electrode active material layer which has excellent smoothness and sufficiently enhanced electron conductivity, that is, it is possible to achieve a high level of both capacity and output characteristics of a non-aqueous electrolytic solution secondary battery to be obtained. The present invention has been completed by further repeating studies on the basis of the above-described finding.

The above-described objects of the present invention have been achieved by the following means.

[1] A positive electrode sheet obtained by laminating a positive electrode collector and a positive electrode active material layer,

in which the positive electrode active material layer contains a positive electrode active material and a conductive auxiliary agent, and has a thickness of 120 $\mu$m or more,
a specific surface area x ($m^2$/g) of the conductive auxiliary agent and a content y (% by mass) of the conductive auxiliary agent in the positive electrode active material layer satisfy $5 \leq x \times y \leq 420$ and $100 \leq x$, and
an electron conductivity z (mS/cm) of the positive electrode active material is 1.0 or more.

[2] The positive electrode sheet according to [1],
in which the x, the y, and the z satisfy $z \leq (-0.0175 \times x \times y) + 10$.
[3] The positive electrode sheet according to [1] or [2],
in which an electrical resistance of a surface of the positive electrode active material is $1.0 \times 10^8$ $\Omega$ or less.
[4] The positive electrode sheet according to any one of [1] to [3],
in which a carbon amount of a surface of the positive electrode active material layer is 5.0% by mass or less.
[5] The positive electrode sheet according to any one of [1] to [4],
in which, in Raman spectroscopic analysis of the surface of the positive electrode active material, a ratio (G/D) of a peak intensity of a G band to a peak intensity of a D band is 0.5 to 4.0.
[6] The positive electrode sheet according to any one of [1] to [5],
in which, in a case where the positive electrode sheet is heated from 25°C at a rate of 5 °C/min in a nitrogen atmosphere, a mass reduction at a point in time when a temperature reaches 600°C is 1% by mass or less.
[7] A non-aqueous electrolytic solution secondary battery comprising:
the positive electrode sheet according to any one of [1] to [6] as a positive electrode.

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less.

The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

With the positive electrode sheet for a non-aqueous electrolytic solution secondary battery according to the aspect of the present invention, it is possible to obtain a non-aqueous electrolytic solution secondary battery having excellent manufacturing suitability and exhibiting excellent battery performance, by incorporating the positive electrode sheet into the non-aqueous electrolytic solution secondary battery. The non-aqueous electrolytic solution secondary battery according to the aspect of the present invention has excellent manufacturing suitability and excellent battery performance.

## BRIEF DESCRIPTION OF THE DRAWINGS

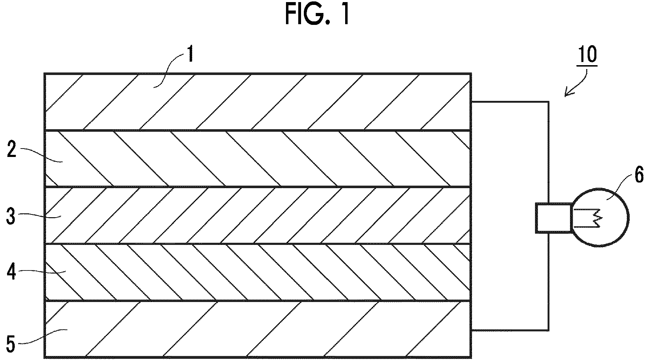

FIG. 1 is a longitudinal cross-sectional view schematically showing a basic lamination configuration of an embodiment of the secondary battery according to the present invention.

## DESCRIPTION OF THE PREFERRED EMBODIMENTS

Preferred embodiments of the present invention will be described, but the present invention is not limited to these embodiments except as specified in the present invention.

[Positive electrode sheet]

The positive electrode sheet according to the embodiment of the present invention is a positive electrode sheet obtained by laminating a positive electrode collector and a positive electrode active material layer, and is a positive electrode sheet suitable as a positive electrode sheet of a non-aqueous electrolytic solution secondary battery.

In the positive electrode sheet according to the embodiment of the present invention, the positive electrode active material layer contains a positive electrode active material and a conductive auxiliary agent, and has a thickness of 120 $\mu$m or more. Furthermore, a specific surface area x ($m^2$/g) of the conductive auxiliary agent and a content y (% by mass) of the conductive auxiliary agent in the positive electrode active material layer satisfy $5 \leq x \times y \leq 420$ and $100 \leq x$, and an electron conductivity z (mS/cm) of the positive electrode active material is 1.0 or more.

As described above, in a case of using the positive electrode active material in which the electron conductivity is controlled to the specific range, using the conductive auxiliary agent having a specific surface area of 100 $m^2$/g or more, and controlling the relationship between the specific surface area and the content of the conductive auxiliary agent, while using the conductive auxiliary agent having a high specific surface area, it is possible to produce a slurry with low viscosity and excellent coatability, and the positive electrode sheet has excellent electron conductivity in a case of being used as an electrode. Therefore, it is possible to form a thick film of 120 $\mu$m or more as the positive electrode active material layer. Furthermore, by being incorporated into a non-aqueous electrolytic solution secondary battery as an electrode, output characteristics of the obtained battery can be improved.

In the present invention, the term "positive electrode sheet" simply includes both an aspect in which the positive electrode sheet is incorporated as a constituent member in a non-aqueous electrolytic solution secondary battery (a state of being incorporated into a secondary battery) and an aspect in which the positive electrode sheet is an electrode material before being incorporated into the non-aqueous electrolytic solution secondary battery. That is, a structure (area, thickness, and the like) of the positive electrode sheet may be a structure which is used as the positive electrode, or a structure which can be processed into the structure which is used as the positive electrode.

It is sufficient that the positive electrode sheet according to the embodiment of the present invention is obtained by laminating the positive electrode collector and the positive electrode active material layer, and the positive electrode active material layers may be laminated on both surfaces of the positive electrode collector or the positive electrode active material layer may be laminated on one surface of the positive electrode collector.

The positive electrode active material layer may be composed of a single layer or may be composed of a plurality of layers.

The positive electrode sheet may further include other layers as necessary. Examples of the other layers include a protective layer (peeling sheet) and a coating layer. In the positive electrode sheet according to the embodiment of the present invention, it is preferable that the positive electrode active material layer is laminated in a state of being in direct contact with the positive electrode collector.

The thickness of the positive electrode active material layer is 120 $\mu$m or more, and it can be set to 120 to 500 $\mu$m, preferably 120 to 300 $\mu$m, more preferably 120 to 250 $\mu$m, and still more preferably 150 to 250 $\mu$m.

The electron conductivity is enhanced by the combination of the positive electrode active material and the conductive auxiliary agent according to the present invention, and high-efficiency electron conductivity can be maintained even in a case where the thickness of the positive electrode active material layer is increased. Therefore, by forming the positive electrode active material layer as a thick film, a load per one particle of the positive electrode active material can be effectively reduced, which leads to reduction of an interface resistance between positive electrode active material particles. As a result, it is considered that the improvement of the output of the battery is achieved.

The specific surface area x (m$^2$/g) of the conductive auxiliary agent constituting the positive electrode active material layer and the content y (% by mass) of the conductive auxiliary agent in the positive electrode active material layer satisfy $5 \le x \times y \le 420$, preferably $7 \le x \times y \le 401$, more preferably $9 \le x \times y \le 300$, and still more preferably $9 \le x \times y \le 280$, and even more preferably $9 \le x \times y \le 180$.

The "specific surface area x" can be measured by a BET method as follows.

-BET specific surface area measuring method-

0.2 g of the conductive auxiliary agent is dried at 120°C for 6 hours, and then measured under the following measurement conditions using a high-precision gas adsorption amount measuring device (manufactured by Microtrac-BEL Corp., BELSORP mini (trade name)).

· Adsorption temperature: 77 K
· Adsorbed gas: N$_2$
· Equilibrium time: 100 seconds
· Purge gas: He

In addition, the "content y of the conductive auxiliary agent in the positive electrode active material layer" means a content of the conductive auxiliary agent in a solid content constituting the positive electrode active material layer, and for example, in a case where the positive electrode active material layer contains a binder in addition to the positive electrode active material and the conductive auxiliary agent, the content y is a proportion (% by mass) of the conductive auxiliary agent in the total content of these components.

The specific surface area x (m$^2$/g) of the conductive auxiliary agent constituting the positive electrode active material layer is not particularly limited as long as the above-described relationship of x and y is satisfied, but is preferably 100 m$^2$/g or more, more preferably 150 m$^2$/g or more, and still more preferably 180 m$^2$/g or more. The upper limit thereof is not particularly limited, and for example, it is practical to set the specific surface area x to 1,500 m$^2$/g or less. The specific surface area x of the conductive auxiliary agent is preferably in a range of 100 to 1,500 m$^2$/g, preferably in a range of 100 to 1,200 m$^2$/g, more preferably in a range of 150 to 1,000 m$^2$/g, and preferably in a range of 180 to 1,000 m$^2$/g.

In a case where the specific surface area x of the conductive auxiliary agent is large, it is preferable from the viewpoint that the electron conductivity of the positive electrode active material layer can be improved even in a case where the content y of the conductive auxiliary agent in the positive electrode active material layer is reduced.

The content y (% by mass) of the conductive auxiliary agent in the positive electrode active material layer is not particularly limited as long as the above-described relationship of x and y is satisfied, but is preferably 0.03% to 4.00% by mass, more preferably 0.03% to 2.00% by mass, still more preferably 0.05% to 1.00% by mass, even more preferably 0.05% to 0.80% by mass, even still more preferably 0.05% to 0.50% by mass, further more preferably 0.05% to 0.45% by mass, even further more preferably 0.05% to 0.30% by mass, even further still more preferably 0.05% to 0.20% by mass, and particularly preferably 0.05% to 0.10% by mass.

The electron conductivity z (mS/cm) of the positive electrode active material is 1.0 or more, preferably 1.2 or more. The upper limit thereof is not particularly limited, but is practically 8.0 or less. The range of the electron conductivity z can be 1.0 to 8.0, preferably 1.0 to 7.0, more preferably 1.2 to 6.0, still more preferably 1.2 to 5.0, even more preferably 1.2 to 4.0, even still more preferably 1.2 to 3.0, and particularly preferably 1.2 to 2.5. In a case where the electron conductivity z of the positive electrode active material is within the above-described range, it is possible to improve the manufacturing suitability and the battery performance of the obtained battery while sufficiently increasing the electron conductivity in the positive electrode active material layer.

The electron conductivity of the positive electrode active material can be controlled by selection of a constituent material of the positive electrode active material, application of a surface coating layer to the positive electrode active material, and the like.

The electron conductivity of the positive electrode active material can be measured by a method described in Examples.

It is preferable that the specific surface area x of the conductive auxiliary agent, the content y of the conductive auxiliary agent, and the electron conductivity z of the positive electrode active material further satisfy $z \leq (-0.0175 \times x \times y) + 10$. In a case where the relationship is satisfied, the manufacturing suitability and the battery performance tend to be further improved.

An electrical resistance on a surface of the positive electrode active material (particles) is not particularly limited. For example, the electrical resistance may be $2.0 \times 10^8$ $\Omega$ or less, more preferably $1.2 \times 10^8$ $\Omega$ or less, and still more preferably $1.0 \times 10^8$ $\Omega$ or less. The electrical resistance is preferably $2.0 \times 10^7$ to $2.0 \times 10^8$ $\Omega$, more preferably $3.0 \times 10^7$ to $1.2 \times 10^8$ $\Omega$, still more preferably $3.0 \times 10^7$ to $1.0 \times 10^8$ $\Omega$, even more preferably $3.0 \times 10^7$ to $8.0 \times 10^7$ $\Omega$, even still more preferably $3.0 \times 10^7$ to $6.0 \times 10^7$ $\Omega$, further more preferably $3.0 \times 10^7$ to $5.0 \times 10^7$ $\Omega$, and even further more preferably $3.5 \times 10^7$ to $5.0 \times 10^7$ $\Omega$. As the electrical resistance is smaller, the electron conductivity is higher. In the present invention, it is preferable to use a positive electrode active material in which the electron conductivity is increased in a specific range.

The electrical resistance of the surface of the positive electrode active material can be controlled by the selection of the constituent material of the positive electrode active material, a surface coating treatment, and the like.

The electrical resistance of the surface of the positive electrode active material can be measured by a method described in Examples.

A carbon amount of the surface of the positive electrode active material layer is not particularly limited, but is preferably 7.0% by mass or less, more preferably 6.0% by mass or less, still more preferably 5.0% by mass or less, even more preferably 4.7% by mass or less, even still more preferably 4.5% by mass or less, and further more preferably 4.0% by mass or less.

Here, the carbon amount of the surface of the positive electrode active material layer corresponds to a carbon amount derived from carbon-containing components (for example, the surface coating of the positive electrode active material, the conductive auxiliary agent, the binder, and the like) contained in the positive electrode active material layer. In a case where the carbon amount is 5.0% by mass or less, an increase in slurry viscosity is suppressed, and thus the electrode tends to be smoother. As a result, the output characteristics can be improved.

The carbon amount of the surface of the positive electrode active material layer is preferably 3.0% to 7.0% by mass, more preferably 3.0% to 6.0% by mass, still more preferably 3.0% to 5.0% by mass, even more preferably 3.0% to 4.7% by mass, even still more preferably 3.0% to 4.5% by mass, further more preferably 3.0% to 4.0% by mass, and even further more preferably 3.0% to 3.9% by mass.

The carbon amount of the surface of the positive electrode active material layer can be measured by a method described in Examples using energy dispersive X-ray spectroscopy (SEM-EDX).

It is preferable that, in Raman spectroscopic analysis of the surface of the positive electrode active material (particles), a ratio (G/D; also referred to as a GD ratio) of a peak intensity of a G band to a peak intensity of a D band is 0.5 to 4.0. It is considered that the GD ratio indicates a crystal state of the surface coating of the surface of the positive electrode active material. As the GD ratio is higher, crystallinity is higher (the number of defects is smaller). In a case where the GD ratio is within the above-described range, it is preferable from the viewpoint that the electron conductivity z of the positive electrode active material can be controlled in the appropriate range.

The GD ratio is preferably 0.5 to 3.5, preferably 0.5 to 3.0, preferably 0.5 to 2.0, more preferably 0.7 to 1.3, still more preferably 0.8 to 1.2, even more preferably 0.9 to 1.2, and even still more preferably 1.0 to 1.2.

The GD ratio can be measured by Raman spectroscopic analysis according to a method described in Examples.

In a case where the positive electrode sheet is heated from 25°C at a rate of 5 °C/min in a nitrogen atmosphere, it is preferable that a mass reduction at a point in time when a temperature reaches 600°C is 1% by mass or less. The mass reduction can be determined by a measuring method described in Examples.

The mass reduction by the above-described measurement generally corresponds to the amount of the binder component contained in the positive electrode active material layer of the positive electrode sheet. This is because the conductive auxiliary agent is difficult to melt under the above-described measurement conditions.

In the present invention, in a case where the above-described mass reduction is 1% by mass or less, an increase in slurry viscosity due to binding of the active material by the binder is suppressed, and the influence of the inhibition of electron conduction by the binder is small, and as a result, the output characteristics are improved, which is preferable.

Hereinafter, each component constituting the positive electrode sheet according to the embodiment of the present invention will be described in detail.

<Positive electrode collector>

The positive electrode collector is not particularly limited, and those used in a typical secondary battery can be appropriately adopted. For the collector which is usually used for these secondary batteries, for example, JP2016-201308A, JP2005-108835A, JP2012-185938A, WO2018/135395A, and the like can be appropriately referred to.

As the positive electrode collector, aluminum, an aluminum alloy, or the like is preferable.

<Positive electrode active material layer>

The positive electrode active material layer contains a positive electrode active material and a conductive auxiliary agent. The positive electrode active material layer may contain other components such as a binder, in addition to the positive electrode active material and the conductive auxiliary agent.

A content of the positive electrode active material in the positive electrode active material layer depends on the content y of the conductive auxiliary agent, but is preferably 96.00% to 99.50% by mass, more preferably 96.00% to 99.40% by mass, still more preferably 98.00% to 99.30% by mass, even more preferably 98.50% to 99.20% by mass, and particularly preferably 99.00% to 99.15% by mass.

(Positive electrode active material)

As the positive electrode active material, a positive electrode active material capable of reversibly intercalating and deintercalating lithium ions is preferable. The material is not particularly limited as long as it exhibits the above-described electron conductivity, and may be transition metal oxides, organic matter, elements capable of being complexed with Li, such as sulfur, complexes of sulfur and metal, or the like.

Among these, as the positive electrode active material, lithium-containing transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio $Li/M^a$ is 0.3 to 2.2.

Specific examples of the lithium-containing transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxide having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

In the present invention, the positive electrode active material is preferably the lithium-containing transition metal phosphoric acid compound (MC), and more preferably $LiFePO_4$.

A shape of the positive electrode active material is not particularly limited, but is preferably a particulate shape.

An average particle diameter (sphere-equivalent average particle diameter) of the positive electrode active material is not particularly limited. For example, the average particle diameter can be 0.1 to 50 $\mu$m, preferably 0.2 to 30 $\mu$m, more preferably 0.5 to 20 $\mu$m, and still more preferably 0.8 to 10 $\mu$m.

In order to allow the positive electrode active material to have a predetermined particle diameter, a typical pulverizer or classifier may be used. A positive electrode active material obtained using a baking method may be used after being washed with water, an acidic aqueous solution, an alkaline aqueous solution, or an organic solvent.

In a case where a commercially available positive electrode active material is used, the average particle diameter of the positive electrode active material is adopted as the value described in the catalog of the manufacturer.

In a case where the information on the average particle diameter of the manufacturer cannot be obtained or in a case where a synthesized positive electrode active material is used, the average particle diameter value (volume-based median diameter D50 in water) obtained by dispersing the positive electrode active material in water and measuring the average particle diameter with a laser diffraction/scattering-type particle size distribution analyzer (for example, Particle LA-960V2 manufactured by HORIBA, Ltd.) is adopted. The same applies to an average particle diameter of solid particles other than the positive electrode active material.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material. These surface coating layers can function as an interface resistance-stabilizing layer.

Examples of a surface coating material include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

From the viewpoint of increasing the electron conductivity to a desired level, it is preferable that the surface of the positive electrode active material is coated with the carbon-based material. It is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

(Conductive auxiliary agent)

The conductive auxiliary agent is not particularly limited as long as the specific surface area is 100 $m^2$/g or more, and a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In the present invention, the conductive auxiliary agent is preferably a carbonaceous material, more preferably carbon blacks, and still more preferably ketjen black.

In a case where the positive electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

Examples of a commercially available product of the conductive auxiliary agent include the following.

Ketjen black: Carbon ECP (specific surface area = 890 $m^2$/g), Carbon ECP600JD (specific surface area = 1,480 $m^2$/g), and Carbon ECP200L (specific surface area = 430 $m^2$/g) (all manufactured by LION SPECIALTY CHEMICALS CO., LTD.)
Carbon black: LITX300 (specific surface area = 180 $m^2$/g) and LITX-HP (specific surface area = 100 $m^2$/g) (both manufactured by Cabot Corporation)
Carbon nanotube (CNT): BT1001M (specific surface area = 272 $m^2$/g) and BT1003M (specific surface area = 230 $m^2$/g) (both manufactured by LG Chem); JENOTUBE6A (specific surface area = 680 $m^2$/g) and JENOTUBE10B (specific surface area = 230 $m^2$/g) (both manufactured by JEIO)

One kind of conductive auxiliary agent or two or more kinds of conductive auxiliary agents may be used.

A shape of the conductive auxiliary agent is not particularly limited, but is preferably a particulate shape.

An average particle diameter (sphere-equivalent average particle diameter) of the conductive auxiliary agent is not particularly limited. For example, the average particle diameter is preferably 0.01 to 50 $\mu$m, more preferably 0.1 to 10 $\mu$m, and still more preferably 0.2 to 2.0 $\mu$m.

The conductive auxiliary agent may be subjected to a surface treatment.

A method of the surface treatment is not particularly limited, and a surface treatment using a chemical treatment agent or an atomic layer deposition (ALD) treatment is preferable.

As the chemical treatment agent, an organic silicon compound (more preferably a silane coupling agent), an organic phosphonic acid compound, or the like is preferable; and examples thereof include methyltrimethoxysilane (MTMS), octadecyltrimethoxysilane, hexamethyldisilazane, tetraethoxysilane, trifluoropropyltrimethoxysilane, vinyltrimethoxysilane, phenyltrimethoxysilane, 3-aminopropyltriethoxysilane, 1H,1H,2H,2H-perfluorooctyltriethoxysilane, trimethoxy(octyl)silane, 1H,1H,2H,2H-perfluorooctane phosphonic acid, 1-octyl phosphonic acid, and perfluoropolyether triethoxysilane (KY1903 (trade name)).

In the ALD treatment, examples of a layer to be deposited include $HfO_2$, $SiO_2$, $ZrO_2$, $Ta_2O_5$, and $TiO_2$.

(Other components)

The positive electrode active material layer can contain, as desired, a binder, an ionic liquid, a thickener, an antifoaming agent, a leveling agent, a dehydrating agent, an antioxidant, or the like. These components can be used as those which are usually used in the non-aqueous electrolytic solution secondary battery.

As the binder, polyvinylidene fluoride (PVDF) or a styrene-butadiene copolymer (SBR) is preferable.

A content of the binder in the positive electrode active material layer is preferably 0.10% to 3.00% by mass, more preferably 0.50% to 2.00% by mass, still more preferably 0.50% to 1.00% by mass, and particularly preferably 0.50% to 0.80% by mass.

<Preparation of positive electrode sheet>

The positive electrode sheet according to the embodiment of the present invention can be prepared by forming the above-described positive electrode active material layer on the above-described positive electrode collector. In a case of forming the positive electrode active material layer, a positive electrode slurry containing a positive electrode active material, a conductive auxiliary agent, and a dispersion medium is typically prepared and used. The positive electrode slurry may contain the above-described other components as necessary. Specifically, as the method of preparing the positive electrode sheet according to the embodiment of the present invention, the positive electrode sheet can be prepared by using a positive electrode collector as a base material, applying the positive electrode slurry thereon (which may be applied through another layer) to form a coating film, and drying the coating film to obtain an electrode sheet having a positive electrode active material layer (coated and dried layer) on the base material. The coating film may be subjected to a press treatment as necessary.

The dispersion medium is not particularly limited. For example, water or a non-aqueous solvent may be used.

As the non-aqueous solvent, aprotic organic solvents are preferable, and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

A compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidone (NMP), N-methyloxazolidinone, N,N'-dimethylimidazolidinone, nitromethane, nitroethane, sulfolane, trimethyl phosphate, dimethylsulfoxide, and dimethylsulfoxide phosphoric acid. These may be used alone or in combination of two or more. Among these, at least one of the group consisting of ethylene carbonate, propylene carbonate, dimethyl carbonate, diethyl carbonate, ethyl methyl carbonate, and γ-butyrolactone is preferable; and a combination of a high-viscosity (high-dielectric constant) solvent (for example, relative permittivity $\varepsilon \geq 30$) such as ethylene carbonate and propylene carbonate and a low-viscosity solvent (for example, viscosity $\leq 1$ mPa·s) such as dimethyl carbonate, ethyl methyl carbonate, and diethyl carbonate is more preferable. By using a mixed solvent having such a combination, dissociation properties of electrolyte salts and mobility of ions are improved. As the above-described non-aqueous solvent, a combination of ethylene carbonate, dimethyl carbonate, and ethyl methyl carbonate is particularly preferable.

The non-aqueous solvent used in the present invention is not limited to these solvents.

In the present invention, the dispersion medium is preferably N-methylpyrrolidone (NMP) or a mixed solvent of N-methylpyrrolidone (NMP) and dimethyl carbonate (DMC).

In the positive electrode slurry, a content of solid contents (components other than the dispersion medium (solvent)) in the slurry is preferably 70% by mass or more, more preferably 72% by mass or more, still more preferably 74% by mass or more, and even more preferably 78% by mass or more. The content of the solid content is preferably 70% to 95% by mass, more preferably 70% to 90% by mass, still more preferably 72% to 87% by mass, even more preferably 74% to 85% by mass, and particularly preferably 78% to 83% by mass.

A method of applying the positive electrode slurry onto the positive electrode collector is not particularly limited, and a general method can be used.

[Non-aqueous electrolytic solution secondary battery]

The non-aqueous electrolytic solution secondary battery according to the embodiment of the present invention (hereinafter, also referred to as the secondary battery according to the embodiment of the present invention) includes a positive electrode, a separator, and a negative electrode in this order, and includes the positive electrode sheet according to the embodiment of the present invention as the positive electrode. The secondary battery according to the embodiment of the present invention is the same as a typical non-aqueous electrolytic solution secondary battery, except that the positive electrode sheet according to the embodiment of the present invention is provided as the positive electrode.

The secondary battery according to the embodiment of the present invention can be obtained by incorporating the positive electrode sheet according to the embodiment of the present invention into a positive electrode of a secondary battery.

Hereinafter, a structure of the general non-aqueous electrolytic solution secondary battery will be described.

FIG. 1 is a schematic cross-sectional view showing a laminated structure of a general non-aqueous electrolytic solution secondary battery 10, including an operation portion 6 which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in the case of lithium ion secondary battery, during charge, while electrons ($e^-$) are supplied to the negative electrode side through an external circuit, lithium ions ($Li^+$) move from the positive electrode through the electrolytic solution and are accumulated in the negative electrode. On the other hand, during discharge, while the lithium ions ($Li^+$) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

The secondary battery according to the embodiment of the present invention includes the positive electrode sheet according to the embodiment of the present invention, instead of the positive electrode active material layer 4 and the positive electrode collector 5 in the above-described general non-aqueous electrolytic solution secondary battery.

In the secondary battery according to the embodiment of the present invention, other members such as the negative electrode active material layer, the negative electrode collector, the electrolyte such as an electrolytic solution (an aqueous electrolytic solution or a non-aqueous electrolytic solution) or a solid electrolyte material, and the separator are not particularly limited except that the positive electrode sheet according to the embodiment of the present invention is provided as the positive electrode of the secondary battery. As these materials, members, and the like, those used for a typical secondary battery can be appropriately adopted. In addition, in the method for manufacturing the secondary battery according to the embodiment of the present invention, a typical method can be appropriately adopted, except that the positive electrode sheet according to the embodiment of the present invention is used as the positive electrode. For the members and the manufacturing methods which are usually used for these secondary batteries, for example, JP2016-201308A, JP2005-108835A, JP2012-185938A, WO2020/067106A, and the like can be appropriately referred to.

The secondary battery according to the embodiment of the present invention can be mounted on electronic apparatuses such as a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, a backup power supply, and a memory card. In addition, in a case of being used for consumer applications, the non-aqueous electrolytic solution secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Hereinafter, the present invention will be described in more detail with reference to Examples. The present invention is not interpreted as being limited thereto.

Examples

<Preparation of positive electrode active material>

10 parts by mass of an LiFePO$_4$ (LFP) powder raw material (manufactured by Gelon Lib Group Co., Ltd., particle diameter: 2.5 $\mu$m) was mixed with 90 parts by mass of water, and a styrene-maleic acid anhydride copolymer was added thereto as an additive at an additive input amount shown in Table 1, and the mixture was stirred and mixed for 3 hours. Thereafter, the mixture was fired at 700°C for 10 hours in a nitrogen atmosphere to obtain positive electrode active materials LFP1, LFP1-2, LFP2, LFP3, LFP4, and LFP5, which were surface-coated with a carbon-based material.

10 parts by mass of an NCM (LiNi$_{1/3}$Co$_{1/3}$Mn$_{1/3}$O$_2$) powder raw material (manufactured by Toshima Manufacturing Co., Ltd., NCM111 (trade name), particle diameter: 8 $\mu$m) was mixed with 90 parts by mass of water, and a styrene-maleic acid anhydride copolymer was added thereto as an additive at the additive input amount shown in Table 1, and the mixture was stirred and mixed for 3 hours. Thereafter, the mixture was fired at 700°C for 10 hours in a nitrogen atmosphere to obtain positive electrode active materials NCM1 and NCM2, which were surface-coated with a carbon-based material.

<Measurement of electron conductivity of positive electrode active material>

An electron conductivity of each of the positive electrode active materials obtained above was measured by the following method.

30 mg of the positive electrode active material was put into a cylindrical tube having an inner diameter of 10 mm, and pressed at 10 MPa to obtain a pressed product of the positive electrode active material (thickness: approximately 0.15 mm). Thereafter, a stainless steel rod having a diameter of 10 mm was inserted from upper and lower opening portions of the tube, the rod was disposed such that an end part of the rod was in contact with the surface of the pressed product, a constant voltage of 10 mV was applied, and resistance measurement was performed. The measurement was carried out three times (N3), and an average value of the obtained resistance values was calculated and defined as a powder resistance (m$\Omega$). Using the obtained powder resistance, the electron conductivity (mS/cm) of the positive electrode active material was calculated from the following expression. In the following expression, a film thickness means a thickness (cm) of the pressed product, and an area means an area (cm$^2$) of the circular surface (one surface) of the pressed product. An electrochemical measuring device (VMP-300 (trade name), manufactured by BioLogic) was used for the resistance measurement.

The measurement results are shown in Table 1.

$$\text{Electron conductivity} = 1 \div \text{Powder resistance} \times \text{Film thickness} \div \text{Area}$$

[Table 1]

| Positive electrode active material | Additive input amount (part by mass) | Electron conductivity of positive electrode active material (mS/cm) |
|---|---|---|
| LFP1 | 0.05 | 0.2 |
| LFP1-2 | 0.08 | 1.1 |
| LFP2 | 0.1 | 1.4 |
| LFP3 | 0.2 | 3.0 |
| LFP4 | 0.4 | 6.0 |
| LFP5 | 0.5 | 8.0 |
| NCM1 | 0.05 | 0.5 |
| NCM2 | 0.1 | 1.3 |

<Preparation of conductive auxiliary agent>

The following were prepared as a conductive auxiliary agent.

AB: Li-100 (trade name), acetylene black, specific surface area = 69 $m^2$/g, manufactured by Denka Company Limited
ECP600JD: Carbon ECP600JD (trade name), ketjen black, specific surface area = 1,480 $m^2$/g, manufactured by LION SPECIALTY CHEMICALS CO., LTD.
LITX300: LITX300 (trade name), carbon black, specific surface area = 180 $m^2$/g, manufactured by Cabot Corporation
Carbon ECP: Carbon ECP (trade name), ketjen black, specific surface area = 890 $m^2$/g, manufactured by LION SPECIALTY CHEMICALS CO., LTD.

<Preparation of positive electrode sheet>

A positive electrode active material, a conductive auxiliary agent, and a binder shown in Table 2, and a dispersion medium were mixed with the ratios of the positive electrode active material, the conductive auxiliary agent, and the binder shown in Table 2 so that a content of solid contents was 80% by mass, thereby preparing each positive electrode slurry. Polyvinylidene fluoride (PVDF) was used as the binder, and N-methylpyrrolidone (NMP) was used as the dispersion medium.

Each of the positive electrode slurries was applied onto one surface of a positive electrode collector (aluminum foil; length: 300 mm, width: 200 mm) having a thickness of 12 $\mu$m, and dried at 120°C until the dispersion medium was completely volatilized. Thereafter, a pressing step was performed using a roll press machine to obtain a sheet-shaped positive electrode (positive electrode sheet) including a positive electrode collector and a positive electrode active material layer. The thickness of the positive electrode active material layer of each positive electrode sheet was adjusted as shown in Table 2. In this way, each of the positive electrode sheets of Experimental Nos. 1 to 38 was prepared.

<Electric resistance of surface of positive electrode active material (particles)>

As an indicator of an electron conductivity of a surface of particles of the positive electrode active material, an electrical resistance of the surface of particles of the positive electrode active material was measured as follows using an atomic force microscope (AFM).

10 mg of particles of the positive electrode active material was adhered to a carbon tape and installed on a sample stage of a scanning probe microscope (PeakForce TUNA (trade name, manufactured by Bruker Corporation). A cantilever of the microscope was brought close to the particles of the positive electrode active material, and a current value I (unit: nA) flowing in a case where a voltage was applied was measured in a microcurrent measurement mode. The voltage was applied in increments of 0.1 V from -1.5 V to +1.5 V. In this way, data of 31 points of the current value I with respect to the voltage value V was obtained. The obtained voltage value V and the current value I were fitted with a straight line (the following expression) to obtain an electrical resistance value R ($\Omega$) as a slope.

.

$$V = RI \, (\text{Expression})$$

.

<Carbon amount on surface of positive electrode active material layer>

Each of the positive electrode sheets obtained above was punched out to have a diameter of 10 mm, and a surface of the positive electrode active material layer (a surface opposite to the positive electrode collector) was subjected to SEM observation at an acceleration voltage of 1.5 kV using a field emission scanning electron microscope device (FE-SEM) (manufactured by JEOL Ltd., JSM 7100F (trade name)), and element analysis was carried out by automatic detection using an energy dispersive X-ray spectroscope (EDX) (manufactured by Thermo Fisher Scientific Inc., Noran System 7 Type (trade name)). A mass ratio of a carbon amount to the total element amount detected by the automatic detection was defined as a C amount (% by mass) on the surface of the positive electrode active material layer.

<GD ratio of surface of positive electrode active material (particles)>

10 mg of each of the particles of the positive electrode active material obtained above was adhered to a carbon tape, and a Raman spectrum was acquired by irradiating the carbon tape with a 532 nm laser using a confocal Raman microscope (manufactured by Renishaw plc., inVia Qontor (trade name)). A peak intensity ratio of the G band (wave number: 1,600 cm$^{-1}$) to the peak intensity of the D band (wave number: 1,350 cm$^{-1}$) of the Raman spectrum was measured at 10 points, and an average value thereof was defined as the GD ratio (G/D ratio).

The GD ratios of the positive electrode active materials LFP1-2, LFP2 to LFP5, and NCM2 used in Examples were all in a range of 0.7 to 1.4.

<Mass reduction of positive electrode active material layer>

Thermogravimetry-differential thermal analysis (TG-DTA) in a case where the temperature was raised from 25°C at a rate of 5 °C/min in a nitrogen atmosphere was carried out to measure an amount of mass reduction after reaching 600°C and after standing at 600°C for 1 hour. More specifically, the measurement was performed as follows.
5 mg of a sample obtained by peeling off the positive electrode active material layer from the collector was placed in a sample pan for a thermogravimetric-differential thermal simultaneous analyzer (manufactured by Shimadzu Corporation, TGA-50H (trade name)), set in the device, and the mass was measured under the following conditions.

· Gas flow rate: nitrogen 50 ml/min
· Measurement conditions: after being allowed to stand at 25°C for 2 hours, the temperature was raised to 600°C at a temperature rising rate of 5 °C/min in a nitrogen atmosphere, and then allowed to stand at 600°C for 1 hour

The mass reduction was calculated by the following expression.

Mass reduction (% by mass) = [(Mass after standing at 25°C for 2 hours) - (Mass after standing at 600°C for 1 hour)] ÷ (Mass after standing at 25°C for 2 hours) × 100

<Evaluation of manufacturing suitability>

As an indicator of manufacturing suitability of the positive electrode sheet, a viscosity of the slurry after the production of the positive electrode slurry and smoothness of the electrode surface after the application were evaluated.

1. Slurry viscosity measuring method

An E-type viscometer (TV-35, manufactured by TOKI SANGYO CO., LTD.) and a standard cone rotor (1"34' × R24) were used. A sample cup was adjusted to 25°C, 1.1 mL of each positive electrode slurry obtained above was put into the sample cup, the sample cup was set in the main body, and the temperature was maintained for 5 minutes until the temperature became constant. Thereafter, a viscosity measured at a rotation speed of 25 rpm was defined as the viscosity value. The obtained viscosity value was evaluated by applying the obtained viscosity value to the following evaluation standard.

-Evaluation standard-

A: less than 100 mPa·s
B: 100 mPa·s or more and less than 1,000 mPa·s
C: 1,000 mPa·s or more and less than 5,000 mPa·s
D: 5,000 mPa·s or more and less than 20,000 mPa·s
E: 20,000 mPa·s or more and less than 50,000 mPa·s
F: 50,000 mPa·s or more and less than 120,000 mPa·s
G: 120,000 mPa·s or more

2. Smoothness evaluation method

The smoothness was evaluated using a film thickness of the positive electrode active material layer as an indicator. Specifically, five central portions of each of the positive electrode sheets obtained above were punched out with a diameter of 10 mm, a film thickness ($\mu$m) of the positive electrode active material layer at the center of each of the obtained punched pieces was measured, and an average value thereof was calculated ($T_C$). In addition, five regions of 2 cm from an end part of the positive electrode sheet were punched out with a diameter of 10 mm, a film thickness ($\mu$m) of the positive

electrode active material layer at the center of each of the obtained punched pieces was measured, and an average value thereof was calculated ($T_S$). A deviation of the average film thickness of the end part with respect to the central portion (($|T_C$ - $T_S|$)/$T_C$ × 100) was calculated, and the obtained value was evaluated by applying the obtained value to the following evaluation standard.

-Evaluation standard-

A: less than 1%
B: 1% or more and less than 2%
C: 2% or more and less than 4%
D: 4% or more and less than 6%
E: 6% or more and less than 8%
F: 8% or more and less than 10%
G: 10% or more

<Evaluation method of electron conductivity of positive electrode sheet>

Another collector (aluminum foil) was superimposed on the surface of the positive electrode active material layer of each of the positive electrode sheets obtained above to form a laminate of collector-positive electrode active material layer-collector. An aluminum tab was attached to the two collectors of the laminate by ultrasonic welding, the laminate was sandwiched between the two aluminum laminated films, and a heat seal and a vacuum seal were performed to produce an electron conductivity evaluation cell. A constant voltage of 10 mV was applied to the cell, and a resistance was measured. The measurement was carried out three times (N3), and an average of the obtained resistance values was defined as an electrode resistance (mΩ). Using the obtained electrode resistance, an electron conductivity of the positive electrode sheet was calculated from the following expression. In the following expression, a film thickness means a thickness (cm) of the positive electrode sheet (including two collectors), and an area means an area ($cm^2$) of the positive electrode sheet (length: 300 mm, width: 200 mm). An electrochemical measuring device (VMP-300 (trade name), manufactured by BioLogic) was used for the resistance measurement.

$$\text{Electron conductivity} = 1 \div \text{Electrode resistance} \times \text{Film thickness} \div \text{Area}$$

-Evaluation standard-

A: 20 mS/cm or more
B: 16 mS/cm or more and less than 20 mS/cm
C: 12 mS/cm or more and less than 16 mS/cm
D: 8 mS/cm or more and less than 12 mS/cm
E: 4 mS/cm or more and less than 8 mS/cm
F: 2 mS/cm or more and less than 4 mS/cm
G: less than 2 mS/cm

<Evaluation of output characteristics>

A secondary battery was produced using each of the positive electrode sheets obtained as described above, an output characteristics test was carried out on the obtained secondary battery as follows, and battery performance was evaluated based on the test result. As a tester, a charging and discharging evaluation device (TOSCAT-3000 (trade name), manufactured by TOYO SYSTEM Co., LTD.) was used.

(Production of secondary battery)

1) Preparation of non-aqueous electrolytic solution A

A mixed solvent in which ethylene carbonate (EC), dimethyl carbonate (DMC), and ethyl methyl carbonate (EMC) were mixed at a mass ratio of EC:DMC:EMC = 3:4:3 was blended with $LiPF_6$ as a lithium salt to a concentration of 1 M to prepare a non-aqueous electrolytic solution (non-aqueous electrolytic solution A).

2) Preparation of negative electrode

A negative electrode active material (artificial graphite), a styrene-butadiene copolymer (SBR) as a binder, carboxymethyl cellulose (CMC) as a thickener, and a solvent (water) were mixed at a mass ratio of negative electrode active material:SBR:CMC:water = 60:1.5:0.5:38 to obtain a negative electrode slurry.

The negative electrode slurry was applied onto one surface of a negative electrode collector (copper foil) having a thickness of 12 μm, and dried at 150°C until the solvent was completely volatilized. Thereafter, a pressing step was performed using a roll press machine to obtain a sheet-shaped negative electrode (negative electrode sheet) including a negative electrode collector and a negative electrode active material layer. A thickness of the negative electrode active material layer was approximately 180 μm.

3) Preparation of secondary battery

Each positive electrode sheet and the negative electrode sheet obtained above were laminated with a separator to form a laminate consisting of positive electrode collector-positive electrode active material layer-separator-negative electrode active material layer-negative electrode collector, thereby obtaining an electrode laminate. By ultrasonic welding, an aluminum tab was attached to an end part of the positive electrode collector, and a nickel tab was attached to an end part of the negative electrode collector. A battery assembly was produced by accommodating the electrode laminate in a laminating container. After injecting the non-aqueous electrolytic solution A in a state in which a liquid injection port was open, the liquid injection port was sealed to seal the case, thereby producing a lithium ion secondary battery for an evaluation test.

(Charging and discharging before test)

In Experimental Examples 1 to 28 and 32 to 38, the battery produced as described above was charged to 3.6 V by constant current (CC)-constant voltage (CV) charging and discharged to 2.0 V by constant current (CC) discharging according to the following conditions.

CC-CV charging: current value of 25 mA, upper limit voltage of 3.6 V, termination current value of 2.5 mA
CC discharging: current value of 25 mA, termination voltage value of 2.0 V

After the above-described charging and discharging before test, one piece of the aluminum laminate was cut and sealed again with a vacuum sealer to release unnecessary gas generated by the charging and discharging before test.

In the case of the NCM of Experimental Examples 29 to 31, the charging and discharging before test were carried out in the same manner as described above, except that the upper limit voltage was changed to 4.2 V and the termination voltage value was changed to 3.0 V in both the CC-CV charging and the CC discharging.

(Evaluation of output characteristics)

An output characteristics test was carried out under the following conditions in Experimental Examples 1 to 28 and 32 to 38 with respect to the battery after the above-described charging and discharging before test (after the gas releasing). Specifically, a discharge capacity for standard was measured by charging up to 3.6 V by CC-CV charging and discharging to 2.0 V by CC discharging under the following conditions, and then a discharge capacity for output evaluation was measured by charging up to 3.6 V by CC-CV charging and discharging to 2.0 V by CC discharging under the following conditions. Furthermore, a discharge capacity retention rate was calculated from the following expression, and the evaluation was performed by applying the calculated value to the following evaluation standard.

Discharge capacity for standard:

CC-CV charging: current value of 25 mA, upper limit voltage of 3.6 V, termination current value of 2.5 mA
CC discharging: current value of 25 mA, termination voltage value of 2.0 V

Discharge capacity for output evaluation:

CC-CV charging: current value of 25 mA, upper limit voltage of 3.6 V, termination current value of 2.5 mA
CC discharging: current value of 1,500 mA, termination voltage value of 2.0 V Discharge capacity retention rate (%) = [(Discharge capacity for output evaluation)/(Discharge capacity for standard)] $\times$ 100

In the case of the NCM of Experimental Examples 29 to 31, the output characteristics test were carried out in the same manner as described above, except that the upper limit voltage was changed to 4.2 V and the termination voltage value was changed to 3.0 V in both the CC-CV charging and the CC discharging.

-Evaluation standard-

A: 80% or more
B: 70% or more and less than 80%
C: 65% or more and less than 70%
D: 60% or more and less than 65%
E: 55% or more and less than 60%
F: 50% or more and less than 55%
G: less than 50%

The obtained results are shown in Tables 2 to 4.

[Table 2]

| Experiment No. | Experimental Example | Positive electrode active material | | Conductive auxiliary agent | | Binder | | Specific surface area of conductive auxiliary agent x | Specific surface area × content x × y | Electron conductivity of positive electrode active material z | Thickness of positive electrode active material layer | Satisfaction of Expression A |
|---|---|---|---|---|---|---|---|---|---|---|---|---|
| | | Type | Content | Type | Content y | Type | Content | | | | | |
| | | | wt% | | wt% | | wt% | m²/g | | mS/cm | μm | |
| 1 | Comparative | LFP1 | 97.20 | AB | 2.00 | PVDF | 0.80 | 69 | 138 | 0.2 | 150 | TRUE |
| 2 | Comparative | LFP1 | 95.20 | AB | 4.00 | PVDF | 0.80 | 69 | 276 | 0.2 | 150 | TRUE |
| 3 | Comparative | LFP1 | 91.20 | AB | 8.00 | PVDF | 0.80 | 69 | 552 | 0.2 | 150 | TRUE |
| 4 | Comparative | LFP2 | 91.20 | AB | 8.00 | PVDF | 0.80 | 69 | 552 | 1.4 | 150 | FALSE |
| 5 | Comparative | LFP3 | 91.20 | AB | 8.00 | PVDF | 0.80 | 69 | 552 | 3.0 | 150 | FALSE |
| 6 | Comparative | LFP1 | 98.40 | ECP600JD | 0.80 | PVDF | 0.80 | 1480 | 1184 | 0.2 | 150 | FALSE |
| 7 | Comparative | LFP3 | 98.40 | ECP600JD | 0.80 | PVDF | 0.80 | 1480 | 1184 | 3.0 | 150 | FALSE |
| 8 | Comparative | LFP2 | 95.20 | AB | 4.00 | PVDF | 0.80 | 69 | 276 | 1.4 | 150 | TRUE |
| 9 | Comparative | LFP3 | 95.20 | AB | 4.00 | PVDF | 0.80 | 69 | 276 | 3.0 | 150 | TRUE |
| 10 | Example | LFP2 | 99.15 | LITX300 | 0.05 | PVDF | 0.80 | 180 | 9 | 1.4 | 150 | TRUE |
| 11 | Example | LFP2 | 99.10 | LITX300 | 0.10 | PVDF | 0.80 | 180 | 18 | 1.4 | 150 | TRUE |
| 12 | Example | LFP2 | 99.00 | LITX300 | 0.20 | PVDF | 0.80 | 180 | 36 | 1.4 | 150 | TRUE |
| 13 | Example | LFP2 | 98.70 | LITX300 | 0.50 | PVDF | 0.80 | 180 | 90 | 1.4 | 150 | TRUE |
| 14 | Example | LFP2 | 99.15 | Carbon | 0.05 | PVDF | 0.80 | 890 | 44.5 | 1.4 | 150 | TRUE |
| 15 | Example | LFP2 | 99.10 | Carbon | 0.10 | PVDF | 0.80 | 890 | 89 | 1.4 | 150 | TRUE |
| 16 | Example | LFP2 | 98.90 | Carbon | 0.30 | PVDF | 0.80 | 890 | 267 | 1.4 | 150 | TRUE |
| 17 | Example | LFP2 | 98.75 | Carbon | 0.45 | PVDF | 0.80 | 890 | 400.5 | 1.4 | 150 | TRUE |
| 18 | Comparative | LFP2 | 98.70 | Carbon | 0.50 | PVDF | 0.80 | 890 | 445 | 1.4 | 150 | TRUE |
| 19 | Example | LFP3 | 99.15 | Carbon | 0.05 | PVDF | 0.80 | 890 | 44.5 | 3.0 | 150 | TRUE |
| 20 | Example | LFP3 | 98.90 | Carbon | 0.30 | PVDF | 0.80 | 890 | 267 | 3.0 | 150 | TRUE |
| 21 | Comparative | LFP3 | 98.70 | Carbon | 0.50 | PVDF | 0.80 | 890 | 445 | 3.0 | 150 | FALSE |
| 22 | Example | LFP4 | 99.15 | Carbon | 0.05 | PVDF | 0.80 | 890 | 44.5 | 6.0 | 150 | TRUE |

| Experiment No. | Experimental Example | Positive electrode active material | | Conductive auxiliary agent | | Binder | | Specific surface area of conductive auxiliary agent x | Specific surface area × content x × y | Electron conductivity of positive electrode active material z | Thickness of positive electrode active material layer | Satisfaction of Expression A |
|---|---|---|---|---|---|---|---|---|---|---|---|---|
| | | Type | Content | Type | Content y | Type | Content | | | | | |
| | | | wt% | | wt% | | wt% | m²/g | | mS/cm | μm | |
| 23 | Example | LFP4 | 99.00 | Carbon | 0.20 | PVDF | 0.80 | 890 | 178 | 6.0 | 150 | TRUE |
| 24 | Example | LFP4 | 98.85 | Carbon | 0.35 | PVDF | 0.80 | 890 | 311.5 | 6.0 | 150 | FALSE |
| 25 | Comparative | LFP4 | 98.70 | Carbon | 0.50 | PVDF | 0.80 | 890 | 445 | 6.0 | 150 | FALSE |
| 26 | Comparative | LFP2 | 98.90 | Carbon | 0.30 | PVDF | 0.80 | 890 | 267 | 1.4 | 100 | TRUE |
| 27 | Example | LFP2 | 98.90 | Carbon | 0.30 | PVDF | 0.80 | 890 | 267 | 1.4 | 250 | TRUE |
| 28 | Example | LFP2 | 98.10 | Carbon | 0.30 | PVDF | 1.60 | 890 | 267 | 1.4 | 150 | TRUE |
| 29 | Comparative | NCM1 | 98.90 | Carbon | 0.30 | PVDF | 0.80 | 890 | 267 | 0.5 | 150 | TRUE |
| 30 | Example | NCM2 | 98.90 | Carbon | 0.30 | PVDF | 0.80 | 890 | 267 | 1.3 | 150 | TRUE |
| 31 | Example | NCM2 | 98.75 | Carbon | 0.45 | PVDF | 0.80 | 890 | 400.5 | 1.3 | 150 | TRUE |
| 32 | Example | LFP1-2 | 98.90 | Carbon | 0.30 | PVDF | 0.80 | 890 | 267 | 1.1 | 150 | TRUE |

EP 4 693 431 A1

[Table 2-2]

| Experiment No. | Experimental Example | Positive electrode active material | | Conductive auxiliary agent | | Binder | | Specific surface area of conductive auxiliary agent × | Specific surface area × content x × y | Electron conductivity of positive electrode active material z | Thickness of positive electrode active material layer | Satisfaction of Expression A |
|---|---|---|---|---|---|---|---|---|---|---|---|---|
| | | Type | Content | Type | Content y | Type | Content | | | | | |
| | | | wt% | | wt% | | wt% | m²/g | | mS/cm | μm | |
| 33 | Example | LFP3 | 98.75 | Carbon ECP | 0.45 | PVDF | 0.80 | 890 | 400 | 3.0 | 150 | TRUE |
| 34 | Example | LFP4 | 98.95 | Carbon ECP | 0.25 | PVDF | 0.80 | 890 | 225 | 6.0 | 150 | TRUE |
| 35 | Example | LFP4 | 98.92 | Carbon ECP | 0.28 | PVDF | 0.80 | 890 | 250 | 6.0 | 150 | FALSE |
| 36 | Example | LFP4 | 98.75 | Carbon ECP | 0.45 | PVDF | 0.80 | 890 | 400 | 6.0 | 150 | FALSE |
| 37 | Example | LFP5 | 99.08 | Carbon ECP | 0.12 | PVDF | 0.80 | 890 | 110 | 8.0 | 150 | TRUE |
| 38 | Example | LFP5 | 99.05 | Carbon ECP | 0.15 | PVDF | 0.80 | 890 | 130 | 8.0 | 150 | FALSE |

(Note to Table 2)

In the column of "Satisfaction of Expression A", it is described whether or not x, y, and z satisfy $z \leq (-0.0175 \times x \times y) + 10$. A case where the expression was satisfied is indicated as "TRUE", and a case where the expression was not satisfied is indicated as "FALSE".

[Table 3]

| Experiment No. | Experimental Example | Electrical resistance of surface of positive electrode active material particles | C amount of surface of positive electrode active material layer | GD ratio | Mass reduction of positive electrode active material layer |
|---|---|---|---|---|---|
| | | $\Omega$ | % by mass | | % by mass |
| 1 | Comparative Example | $2.0 \times 10^8$ | 5.1 | 0.5 | 0.8 |
| 2 | Comparative Example | $2.0 \times 10^8$ | 6.2 | 0.5 | 0.8 |
| 3 | Comparative Example | $2.0 \times 10^8$ | 10.2 | 0.5 | 0.8 |
| 4 | Comparative Example | $4.5 \times 10^7$ | 10.3 | 1.0 | 0.8 |
| 5 | Comparative Example | $3.8 \times 10^7$ | 10.5 | 1.2 | 0.8 |
| 6 | Comparative Example | $2.0 \times 10^8$ | 4.0 | 0.5 | 0.8 |
| 7 | Comparative Example | $3.8 \times 10^7$ | 4.0 | 1.2 | 0.8 |
| 8 | Comparative Example | $4.5 \times 10^7$ | 7.2 | 1.0 | 0.8 |
| 9 | Comparative Example | $3.8 \times 10^7$ | 7.2 | 1.2 | 0.8 |
| 10 | Example | $4.5 \times 10^7$ | 3.2 | 1.0 | 0.8 |
| 11 | Example | $4.5 \times 10^7$ | 3.8 | 1.0 | 0.8 |
| 12 | Example | $4.5 \times 10^7$ | 4.0 | 1.0 | 0.8 |
| 13 | Example | $4.5 \times 10^7$ | 4.1 | 1.0 | 0.8 |
| 14 | Example | $4.5 \times 10^7$ | 3.5 | 1.0 | 0.8 |
| 15 | Example | $4.5 \times 10^7$ | 3.9 | 1.0 | 0.8 |
| 16 | Example | $4.5 \times 10^7$ | 5.1 | 1.0 | 0.8 |
| 17 | Example | $4.5 \times 10^7$ | 5.1 | 1.0 | 0.8 |
| 18 | Comparative Example | $4.5 \times 10^7$ | 6.1 | 1.0 | 0.8 |
| 19 | Example | $3.8 \times 10^7$ | 3.6 | 1.2 | 0.8 |
| 20 | Example | $3.8 \times 10^7$ | 4.6 | 1.2 | 0.8 |
| 21 | Comparative Example | $3.8 \times 10^7$ | 6.8 | 1.2 | 0.8 |
| 22 | Example | $3.0 \times 10^7$ | 4.4 | 1.3 | 0.8 |
| 23 | Example | $3.0 \times 10^7$ | 5.2 | 1.3 | 0.8 |
| 24 | Example | $3.0 \times 10^7$ | 6.2 | 1.3 | 0.8 |
| 25 | Comparative Example | $3.0 \times 10^7$ | 6.9 | 1.3 | 0.8 |
| 26 | Comparative Example | $4.5 \times 10^7$ | 5.1 | 1.0 | 0.8 |
| 27 | Example | $4.5 \times 10^7$ | 5.1 | 1.0 | 0.8 |
| 28 | Example | $4.5 \times 10^7$ | 7.0 | 1.0 | 1.6 |
| 29 | Comparative Example | $1.7 \times 10^8$ | 5.1 | 0.6 | 0.8 |
| 30 | Example | $5.7 \times 10^7$ | 5.1 | 0.95 | 0.8 |
| 31 | Example | $5.7 \times 10^7$ | 5.9 | 0.95 | 0.8 |
| 32 | Example | $1.2 \times 10^8$ | 5.1 | 0.9 | 0.8 |
| 33 | Example | $3.8 \times 10^7$ | 5.1 | 1.2 | 0.8 |

(continued)

| Experiment No. | Experimental Example | Electrical resistance of surface of positive electrode active material particles | C amount of surface of positive electrode active material layer | GD ratio | Mass reduction of positive electrode active material layer |
|---|---|---|---|---|---|
| | | $\Omega$ | % by mass | | % by mass |
| 34 | Example | $3.0 \times 10^7$ | *5.1* | 1.3 | 0.8 |
| 35 | Example | $3.0 \times 10^7$ | *5.1* | 1.3 | 0.8 |
| 36 | Example | $3.0 \times 10^7$ | *5.1* | 1.3 | 0.8 |
| 37 | Example | $2.9 \times 10^7$ | 5.2 | 1.4 | 0.9 |
| 38 | Example | $2.9 \times 10^7$ | 5.2 | 1.4 | 0.9 |

[Table 4]

| Experiment No. | Experimental Example | Manufacturing suitability | Manufacturing suitability | Electrode | Battery performance |
|---|---|---|---|---|---|
| | | Slurry viscosity | Smoothness | Electron conductivity | Output characteristics |
| 1 | Comparative Example | E | G | G | G |
| 2 | Comparative Example | E | G | G | G |
| 3 | Comparative Example | G | G | G | G |
| 4 | Comparative Example | G | G | G | G |
| *5* | Comparative Example | G | G | G | G |
| 6 | Comparative Example | G | G | G | G |
| 7 | Comparative Example | G | G | G | G |
| 8 | Comparative Example | E | G | G | G |
| 9 | Comparative Example | E | G | G | G |
| 10 | Example | A | A | A | A |
| 11 | Example | A | A | A | A |
| 12 | Example | B | B | B | B |
| 13 | Example | B | B | B | B |
| 14 | Example | A | A | A | A |
| 15 | Example | A | A | A | A |
| 16 | Example | A | C | C | B |
| 17 | Example | D | D | D | D |
| 18 | Comparative Example | G | G | G | G |
| 19 | Example | A | A | A | A |
| 20 | Example | B | B | B | B |
| 21 | Comparative Example | G | G | G | G |
| 22 | Example | D | D | C | C |
| 23 | Example | D | D | D | D |
| 24 | Example | E | E | E | E |
| 25 | Comparative Example | G | G | G | G |
| 26 | Comparative Example | A | G | G | G |

(continued)

| Experiment No. | Experimental Example | Manufacturing suitability | Manufacturing suitability | Electrode | Battery performance |
|---|---|---|---|---|---|
| | | Slurry viscosity | Smoothness | Electron conductivity | Output characteristics |
| 27 | Example | A | A | A | A |
| 28 | Example | B | C | D | C |
| 29 | Comparative Example | B | C | G | G |
| 30 | Example | A | A | A | A |
| 31 | Example | D | D | D | C |
| 32 | Example | D | D | E | E |
| 33 | Example | D | D | D | D |
| 34 | Example | D | D | D | D |
| 35 | Example | E | E | E | E |
| 36 | Example | E | E | E | E |
| 37 | Example | D | D | D | D |
| 38 | Example | E | E | E | E |

The positive electrode sheets of Experimental Nos. 1 to 9, 18, 21, 25, 26, and 29 included a positive electrode active material layer which did not satisfy at least one of the following requirements: the specific surface area x of the conductive auxiliary agent and the content y of the conductive auxiliary agent in the positive electrode active material layer satisfied $5 \leq x \times y \leq 420$ and $100 \leq x$; the electron conductivity z of the positive electrode active material layer was 1.0; or the thickness of the positive electrode active material layer was 120 $\mu$m or more. Among these, in the positive electrode sheets of Experimental Nos. 1 to 9, 18, 21, and 25, the viscosity of the positive electrode slurry used for forming the positive electrode sheet was 20,000 mPa·s or more, so that the deviation in film thickness was 10% or more, and thus the manufacturing suitability was deteriorated. In the positive electrode sheet of Experimental No. 26, the deviation in film thickness was 10% or more. In addition, the positive electrode sheets of Experimental Nos. 1 to 9, 18, 21, 25, 26, and 29 had an electron conductivity of less than 2 mS/cm, which was poor in conductivity. In the secondary batteries formed using these positive electrode sheets, the discharge capacity retention rate was less than 50%.

On the other hand, all of the positive electrode sheets according to the embodiment of the present invention of Experimental Nos. 10 to 17, 19, 20, 22 to 24, 27, 28, and 30 to 38 included the positive electrode active material layer satisfying all of the following requirements: $5 \leq x \times y \leq 420$ and $100 \leq x$, where x is the specific surface area of the conductive auxiliary agent and y is the content of the conductive auxiliary agent in the positive electrode active material layer; the electron conductivity z of the positive electrode active material layer is 1.0; and the thickness of the positive electrode active material layer is 120 $\mu$m or more. In these positive electrode sheets, the viscosity of the positive electrode slurry used for forming the positive electrode sheet was reduced, and the deviation in film thickness was small. It is considered to be due to the improvement in dispersion stability of the positive electrode slurry. These positive electrode sheets also had excellent electron conductivity, and the secondary batteries formed using these positive electrode sheets also had an excellent discharge capacity retention rate.

Among these, in a case where the expression A is satisfied, the manufacturing suitability and the battery performance tended to be further improved.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2023-051785 filed in Japan on March 28, 2023, the contents of which are incorporated herein by reference, as a part of the description of the present specification.

Explanation of References

10: non-aqueous electrolytic solution secondary battery

1: negative electrode collector
2: negative electrode active material layer
3: separator
4: positive electrode active material layer
5: positive electrode collector
6: operation portion (light bulb)

**Claims**

1. A positive electrode sheet obtained by laminating a positive electrode collector and a positive electrode active material layer,

   wherein the positive electrode active material layer contains a positive electrode active material and a conductive auxiliary agent, and has a thickness of 120 $\mu$m or more,
   a specific surface area x ($m^2/g$) of the conductive auxiliary agent and a content y (% by mass) of the conductive auxiliary agent in the positive electrode active material layer satisfy $5 \leq x \times y \leq 420$ and $100 \leq x$, and
   an electron conductivity z (mS/cm) of the positive electrode active material is 1.0 or more.

2. The positive electrode sheet according to claim 1,
   wherein the x, the y, and the z satisfy $z \leq (-0.0175 \times x \times y) + 10$.

3. The positive electrode sheet according to claim 2,
   wherein an electrical resistance of a surface of the positive electrode active material is $1.0 \times 10^8$ $\Omega$ or less.

4. The positive electrode sheet according to claim 3,
   wherein a carbon amount of a surface of the positive electrode active material layer is 5.0% by mass or less.

5. The positive electrode sheet according to claim 4,
   wherein, in Raman spectroscopic analysis of the surface of the positive electrode active material, a ratio (G/D) of a peak intensity of a G band to a peak intensity of a D band is 0.5 to 4.0.

6. The positive electrode sheet according to claim 5,
   wherein, in a case where the positive electrode sheet is heated from 25°C at a rate of 5 °C/min in a nitrogen atmosphere, a mass reduction at a point in time when a temperature reaches 600°C is 1% by mass or less.

7. A non-aqueous electrolytic solution secondary battery comprising:
   the positive electrode sheet according to any one of claims 1 to 6 as a positive electrode.

FIG. 1

## INTERNATIONAL SEARCH REPORT

| International application No. |
| --- |
| **PCT/JP2024/012308** |

**A. CLASSIFICATION OF SUBJECT MATTER**

*H01M 4/13*(2010.01)i
FI:  H01M4/13

According to International Patent Classification (IPC) or to both national classification and IPC

**B. FIELDS SEARCHED**

Minimum documentation searched (classification system followed by classification symbols)

H01M4/13

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2010/035681 A1 (SANYO ELECTRIC CO., LTD.) 01 April 2010 (2010-04-01) | 1-7 |
| A | JP 2004-103546 A (MITSUBISHI CHEMICAL CORPORATION) 02 April 2004 (2004-04-02) | 1-7 |
| A | JP 9-92265 A (DENSO CORPORATION) 04 April 1997 (1997-04-04) | 1-7 |
| A | WO 2011/052533 A1 (DKS CO. LTD.) 05 May 2011 (2011-05-05) | 1-7 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 June 2024** | **18 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/012308** |

| Patent document cited in search report | | | Publication date (day/month/year) | Patent family member(s) | | | Publication date (day/month/year) |
|---|---|---|---|---|---|---|---|
| WO | 2010/035681 | A1 | 01 April 2010 | US | 2011/0177391 | A1 | |
| | | | | EP | 2337122 | A1 | |
| | | | | CN | 102160215 | A | |
| JP | 2004-103546 | A | 02 April 2004 | (Family: none) | | | |
| JP | 9-92265 | A | 04 April 1997 | US | 5789114 | A | |
| WO | 2011/052533 | A1 | 05 May 2011 | US | 2012/0270101 | A1 | |
| | | | | EP | 2495795 | A1 | |
| | | | | CN | 102598388 | A | |
| | | | | KR | 10-2012-0080227 | A | |

Form PCT/ISA/210 (patent family annex) (July 2022)

**REFERENCES CITED IN THE DESCRIPTION**

**Patent documents cited in the description**

- JP 2022139794 A
- JP 2016201308 A
- JP 2005108835 A
- JP 2012185938 A
- WO 2018135395 A
- WO 2020067106 A
- JP 2023051785 A